Europäisches Patentamt

European Patent Office

Office européen des brevets

(19)

(11) Veröffentlichungsnummer: **0 014 262**

**A1**

(12) **EUROPÄISCHE PATENTANMELDUNG**

(21) Anmeldenummer: 79105390.3

(22) Anmeldetag: 27.12.79

(51) Int. Cl.³: **E 04 C 2/26**
E 04 C 2/40
// B63B5/24, B64C3/00, B64C1/00

(30) Priorität: 29.12.78 DE 2856729
19.03.79 DE 2910750

(43) Veröffentlichungstag der Anmeldung:
20.08.80 Patentblatt 80/17

(84) Benannte Vertragsstaaten:
AT BE CH FR GB IT LU NL SE

(71) Anmelder: Mader, Paul, Dr.
Dankelmannstrasse 21
D-1000 Berlin 19(DE)

(72) Erfinder: Mader, Paul, Dr.
Dankelmannstrasse 21
D-1000 Berlin 19(DE)

(74) Vertreter: Hansmann, Axel et al,
Patentanwälte Licht. Dr. Schmidt Hansmann. Herrmann
. Baumann Rosshaupterstrasse 65
D-8000 München 70(DE)

(54) **Wandung eines Hohlkörpers.**

(57) Besonders leichte und feste Wandung für einen Bootskörper oder Flügel und Rumpf eines Flugzeugs oder Luftschiffs, für das Dach eines Gebäudes, für Silos und dergleichen. Diese Wandung besteht aus einer Aussenhaut (22), aus
einer Innenhaut (20), aus einem dazwischen liegenden Kern
(24) und aus festen Stäben (28), die in den Kern eingebettet,
durch Stränge aus hochzugfesten Fasern verstärkt und in Halter (26) gelagert sind, die sich mit den Stäben (28) im Kern (24)
befinden, an der Aussenhaut (22) und/oder an der Innenhaut
(20) angeheftet sind und im Abstand voneinander an jedem
Stab (28) starr befestigt sind. Die Wandung kann aus einzelnen Tafeln gebildet sein, die wesentlich kürzer als die Stäbe
(28) bemessen sind und entweder aneinander befestigte
Flanschen (30) haben oder stumpf aneinander an Stossstellen
(10) zusammenstossen, die durch Bleche (32) überdeckt und
abgedichtet sind. Diese Bleche können Körper bilden, die zur
Aufnahme und Befestigung der Halten (26) dienen.

Fig 3

**Licht, Schmidt, Hansmann,
Herrmann, Baumann**

Patentanwälte Licht, Schmidt, Hansmann, Herrmann, Baumann
Albert-Roßhaupter-Str. 65   8000 München 70

**Patentanwälte**
Professional Representatives
before the European Patent Office

Dipl.-Ing. Martin Licht
Dr. Reinhold Schmidt
Dipl.-Wirtsch.-Ing. Axel Hansmann
Dipl.-Phys. Sebastian Herrmann
Dipl.-Phys. Eduard Baumann

Albert-Roßhaupter-Str. 65
8000 München 70

Telefon: (089) 760 30 91
Telex:   5 212 284 pats d
Telegramme: Lipatli München

Wandung eines Hohlkörpers

Die Erfindung bezieht sich auf eine Wandung eines Hohlkörpers, die aus aufeinander haftenden Schichten besteht, nämlich eine Außenhaut, eine Innenhaut und dazwischen einen Kern aufweist und durch Stränge aus hochzugfesten Fasern verstärkt ist.

Bei einer bekannten Wandung dieser Art (DE-OS 26 26 537) besteht dieser Kern aus formschlüssig aneinandergelegten profilierten pyroplastischen Stangen, die zwischen sich Rillen freilassen, in welche Kohlenstoffasern eingelegt werden können. Die Kohlenstoffaserverstärkung ist hierbei ein Teil des äußeren oder inneren Laminats, also der Haut. Die profilierten röhrenförmigen Stangen sind eine besondere Art von Sandwichkern.

Eine solche Wandung eignet sich indessen nur für Bootskörper in Einzelbauweise. Die Festigkeit liegt nicht höher als bei üblichen Sandwichrümpfen, wodurch keine größeren Rümpfe als bisher gebaut werden können. Auch eine Gewichtsverminderung ist, wenn überhaupt, nur in geringem Umfang zu erreichen, da das Hauptgewicht (der größere Anteil) von den beiden Laminatsschichten erbracht wird, welche auch aus Gründen der Festigkeit nicht schwächer gehalten werden können als ein Laminat bei einer Sandwichwand mit bisher

- 2 -

üblichem Kernmaterial. Keinesfalls ermöglicht diese Methode eine rationelle Serienfertigung in größ.... Umfang.

Der Erfindung liegt die Aufgabe zugrunde, eine aus einer Außenhaut, einer Innenhaut und einem dazwischen liegenden Kern bestehende Wandung eines Hohlkörpers zu schaffen, die durch Stränge aus Kohlenstoffasern verstärkt ist und sich dadurch auszeichnet, daß ihr Gewicht im Verhältnis zur Festigkeit weiter verringert ist und sie sich für Hohlkörper beliebiger Größe eignet.

Diese Aufgabe ist erfindungsgemäß dadurch gelöst, daß Stäbe, deren Werkstoff durch die Stränge aus hochzugfesten Fasern verstärkt ist, in Haltern gelagert sind, die sich mit den Stäben im Kern befinden, an der Innenhaut und/oder an der Außenhaut angeheftet sind und im Abstand voneinander an jedem Stab starr befestigt sind.

Durch diese Ausgestaltung der Wandung ist erreicht, daß die Halter, die sich auf den Stäben aus hochzugfesten Fasern abstützen und an der Innenhaut bzw. der Außenhaut haften, die Wandung mit hoher Festigkeit abstützen. Daher kann die Biegefestigkeit der Innenhaut bzw. der Außenhaut erheblich verringert werden, etwa durch Verringerung der Wandstärke oder durch Verwendung eines Werkstoffs von sehr geringem spezifischen Gewicht.

Die Erfindung eignet sich in erster Linie für Bootskörper, ist aber auch auf Flügel und Rümpfe von Flugzeugen, auf Dächer von Gebäuden (die unter den Begriff "Hohlkörper" fallen), auf Silos, Starrluftschiffe und dergleichen anwendbar.

Die hochzugfesten Fasern können aus Kohlenstoff bestehen.

Bei einer bevorzugten Ausführungsform der Erfindung ist die Wandung aus einzelnen aufeinanderstoßenden und mit-

- 3 -

einander verbundenen Tafeln gebildet, die wesentlich kürzer als die Stäbe bemessen sind. Das bietet den Vorteil, daß man die Wandung des Hohlkörpers in einzelne Felder unterteilen und dennoch die verstärkenden Stränge aus hochzugfesten Fasern über die ganze Wandung durchgehend erstrecken kann.

Die Stoßstellen, an denen die Tafeln stumpf aneinanderstoßen, können von Blechen abgedeckt und abgedichtet sein, an denen die Halter befestigt sind.

Die Tafeln können aber auch an ihren Kanten mit Flanschen versehen sein. Wenn die Halter von Buchsen gebildet werden, die je einen Stab umgeben, was sich besonders bewährt hat, dann können sich diese Buchsen durch die Flanschen der Tafeln hindurcherstrecken. Dabei können die Buchsen mit den Flanschen haftend verbunden sein.

Die die Stoßstellen abdeckenden Bleche können von Blechkörpern gebildet sein, die parallel zur Stoßstelle verlaufende Seitenwandungen haben, die mit Öffnungen zur Aufnahme der Buchsen versehen sind und sich an diesen Buchsen abstützen.

Indessen können die Blechkörper auch von kurzen Rohren gebildet werden, deren Achse parallel zur Stoßstelle verläuft und deren Querschnittsprofil rechteckig oder trapezförmig ist. Auch können diese Blechkörper ein U-Querschnittsprofil haben.

Der Kern kann zusätzlich zu der Lage paralleler, faserverstärkter, mit ihren Haltern an der Außenhaut angehefteter Stäbe eine Lage sich quer dazu erstreckender faserverstärkter Stäbe enthalten, deren Halter an der Innenhaut angeheftet sind, und durch ein zur Außenhaut und zur Innenhaut paralleles Blech unterteilt sein, an dem beiderseits die Lagen der Stäbe mittels ihrer Halter angeheftet sind.

- 4 -

Werden als Halter Buchsen verwendet, dann empfiehlt es sich, daß sich jeder Stab nach einem Ende hin verjüngt und daß sich die lichte Weite der ihn umgebenden Buchsen entsprechend ändert und daß der Stab in seinen Buchsen verkeilt ist. Das ergibt eine besonders starre Verbindung zwischen den Buchsen und den Stäben und erleichtert den Zusammenbau der Wandung.

Die Buchsen können Flügel haben, die an der Innenhaut oder der Außenhaut oder an beiden angeklebt sind. Das ergibt eine sehr zuverlässige Befestigung der Halter an der Innenhaut und der Außenhaut.

Auch können einige oder alle Halter statt von Buchsen je von einem U-förmigen Bügel gebildet werden, der den Stab umgibt. In diesem Fall können die Schenkel des Bügels Flanschen haben, die an der einen Haut haftend befestigt sind, während der Bügel an der anderen Haut haftend befestigt ist.

Auch kann der Bügel mit seinen Schenkeln um den Stab herumgebogen sein und nur an der einen Haut haften, während der Stab an der anderen Haut haftend befestigt ist.

Die Flanschen der Schenkel von Bügeln, die die benachbarten Stäbe umgeben, können aus einem Stück bestehen.

Ein besonders einfacher Zusammenbau der Wandung läßt sich dadurch ermöglichen, daß jeder Halter aus zwei Hälften besteht, von denen die eine an der einen und der andere an der anderen Haut befestigt ist.

In diesem Falle können die beiden Hälften der Halter beim Zusammenbau der Häute mit dem Kern den zwischen ihnen liegenden ib mit einer Schnappverbindung ergreifen und zwischen sich festhalten.

Dabei kann jede Hälfte des Halters U-förmig gestaltet sein und seine Schenkel können Vorsprünge haben, die in Vertiefungen des Stabes einschnappen.

Auch kann jeder Halter aus einem Zapfen mit einem Kopf bestehen, der in eine Öffnung des Stabes hineingedrückt werden kann und dann darin einschnappt.

Die Stäbe können hohl sein. Das ergibt ein besonders niedriges Gewicht der Wandung.

Die hohlen Stäbe können ein viereckiges Querschnittsprofil haben.

Die Versteifung der Innenhaut und der Außenhaut durch die Stäbe bietet die Möglichkeit, die Innenhaut oder die Außenhaut oder beide aus Aluminiumblech herzustellen.

Der Kern besteht am besten wie an sich bekannt aus einem Schaumstoff.

Die Außenhaut und/oder die Innenhaut kann mit einer durch hochzugfeste Fasern verstärkten Schicht belegt und durch diese Schicht von dem Kern getrennt sein.

Die am Rand der Wandung endenden Stäbe erstrecken sich vorzugsweise in einen Blechträger mit U-Profil hinein, von dessen Armen der eine an der Innenhaut und der andere an der Außenhaut angeheftet ist.

Dabei kann der U-Profilträger über die Ränder der Innenhaut und der Außenhaut um eine Strecke hervorstehen, die mindestens der Stärke der Wandung entspricht, und mit Querbohrungen versehen sein, die bei Anschluß querverlaufender Wandungen zur Aufnahme der Stäbe dieser Wandungen dienen.

In den Zeichnungen, in denen bevorzugte Ausführungsbeispiele der Erfindung dargestellt sind, zeigen

Fig. 1  ein Boot im Aufriß, dessen Wandung erfindungsgemäß ausgestaltet ist,

Fig. 2  einen Querschnitt durch den Bootskörper nach
        der Linie II-II der Fig. 1,

Fig. 3  eine schaubildliche Darstellung einer Tafel der
        Wandung, wobei die Innenhaut und der Kern zum Teil
        fortgebrochen sind,

Fig. 4  eine Buchse mit Flügeln,

Fig. 5  den Schnitt nach der Linie 5-5 der Fig. 4

Fig. 6  drei durch Flügel verbundene Buchsen,

Fig. 7  den Schnitt nach der Linie 7-7 der Fig. 5,

Fig. 8  eine schaubildliche Innenansicht einer Ausführungsform der Wandung, bei der die Innenhaut zum Teil
        entfernt ist, um die Stränge aus hochzugfesten Fa-
        sern freizulegen, und der Kern aus Schaumstoff
        zum Teil entfernt ist, um die Belegung der Außenhaut mit einer Schicht zu zeigen, die durch
        hochzugfeste Zugfasern verstärkt ist, wobei die
        Halter je von einem U-förmigen Bügel gebildet werden,

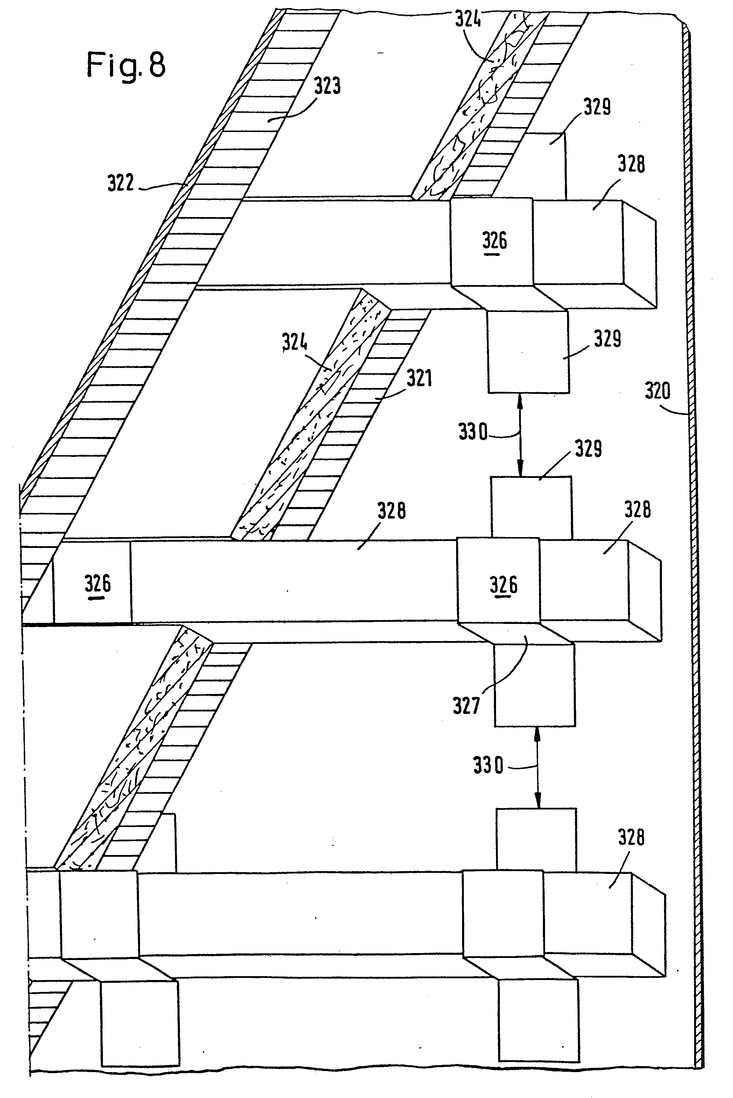

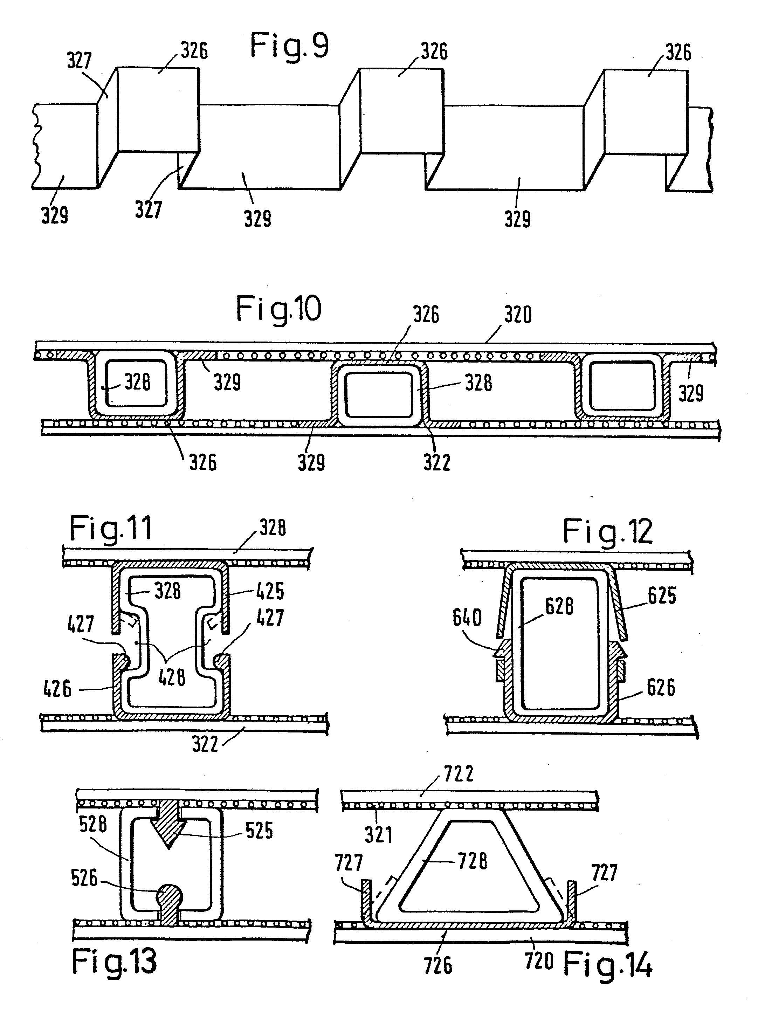

Fig. 9  eine etwas andere Ausgestaltung der in Fig. 8 gezeigten Halter in schaubildlicher Darstellung,

Fig. 10 einen Querschnitt durch eine Wandung ähnlich der
        in Fig. 8 gezeigten, jedoch mit hohlen Stäben,

Fig. 11 einen Teilquerschnitt durch eine Wandung, bei der
        die die hohlen Stäbe aufnehmenden Halter aus zwei
        Hälften bestehen, von denen die eine an der einen
        Haut und die andere an der anderen Haut befestigt ist,

Fig. 12 einen Teilquerschnitt durch eine Wandung mit einem Halter ähnlich der Fig. 11,

Fig. 13 einen Teilquerschnitt durch eine Wandung,bei der die Halter eines hohlen Stabes aus Zapfen mit einem Kopf bestehen, der in eine Öffnung des Stabes eingedrückt werden kann,

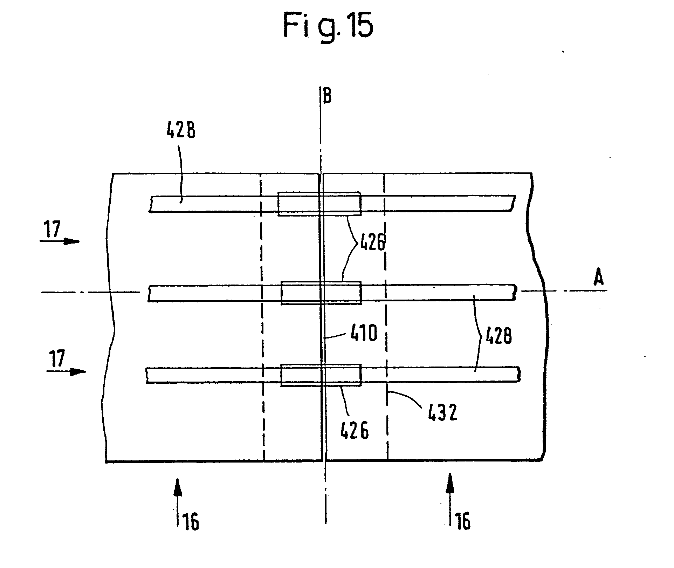

Fig. 14 einen Querschnitt durch eine Wandung, bei der jeder Halter eines hohlen Stabes von einem Bügel gebildet wird, der mit seinen Schenkeln um den Stab herumgebogen ist und nur an der einen Haut haftet, während der Stab an der anderen Haut haftend befestigt ist,

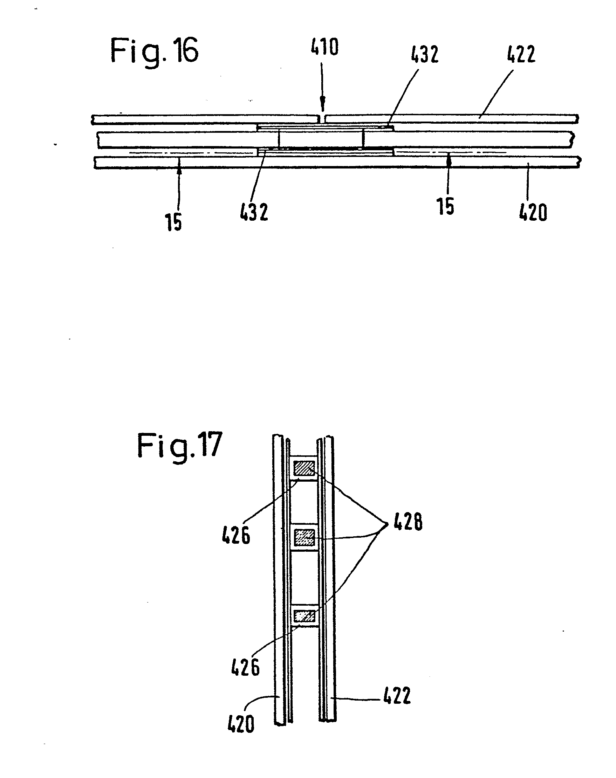

Fig. 15 die Schnittansicht einer Wandung, deren Tafeln stumpf aneinanderstoßen, wobei die Stoßstellen von Blechen abgedeckt und abgedichtet sind, an denen die Halter befestigt sind, wobei es sich um den Schnitt nach der Linie 15-15 der Fig. 16 handelt,

Fig. 16 die Stirnansicht der in Fig. 15 gezeigten Wandung in Richtung der Pfeile 16 der Fig. 15 betrachtet,

Fig. 17 eine Stirnansicht der in den Fig. 15 und 16 gezeigten Wandung betrachtet in Richtung der Pfeile 17 der Fig. 15,

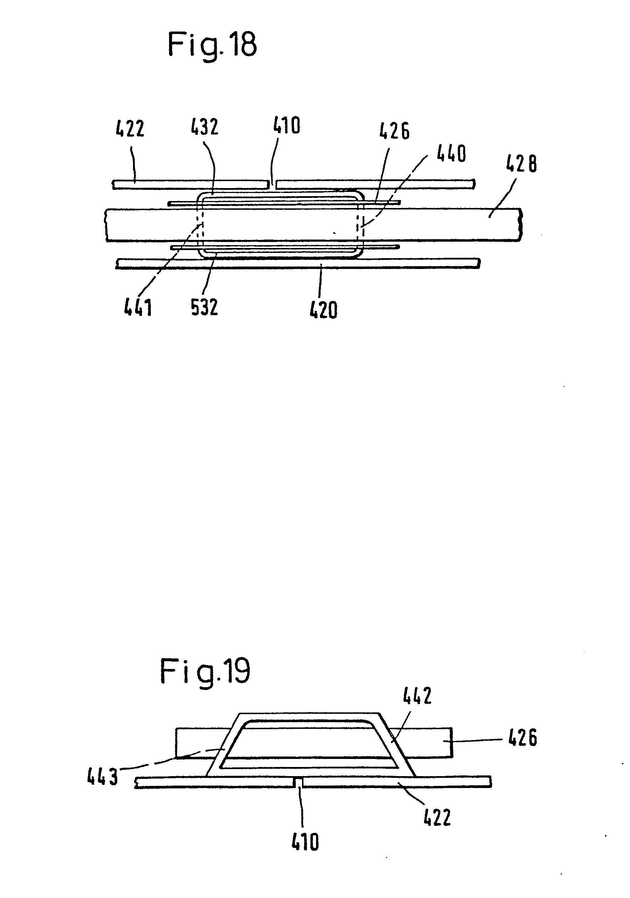

Fig. 18, 19 und 20 Wandungen verschiedener anderer Ausführungsformen in einer der Fig. 16 entsprechenden Darstellung,

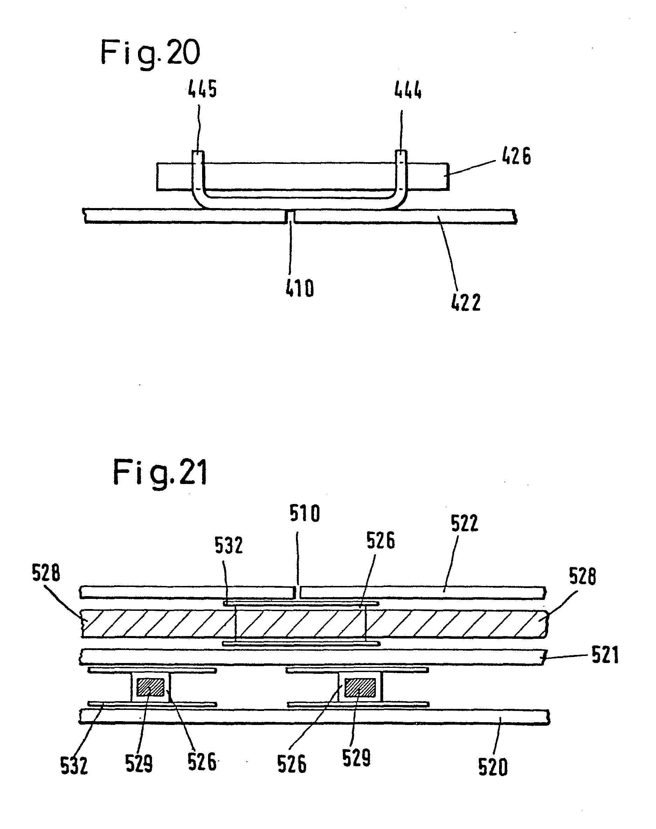

Fig. 21 eine der Fig. 16 entsprechende Darstellung einer Ausführungsform der Wandung, bei der sich quer zu einer inneren Lage von Stäben eine äußere Lage von Stäben erstreckt, und

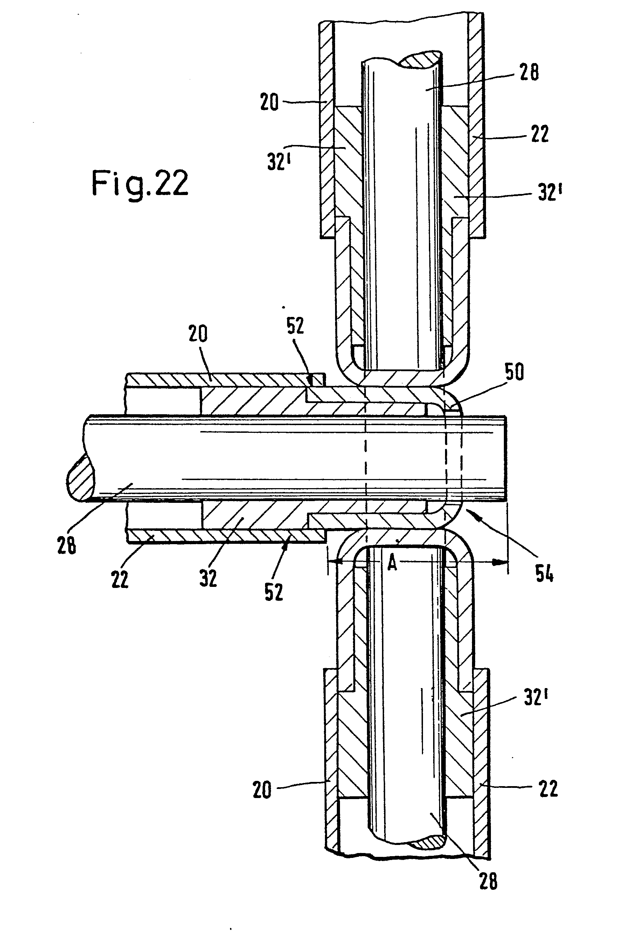

Fig. 22 einen Querschnitt durch drei Wände, die an ihren Rändern zusammenstoßen und dort durch U-förmig profilierte Träger verbunden sind.

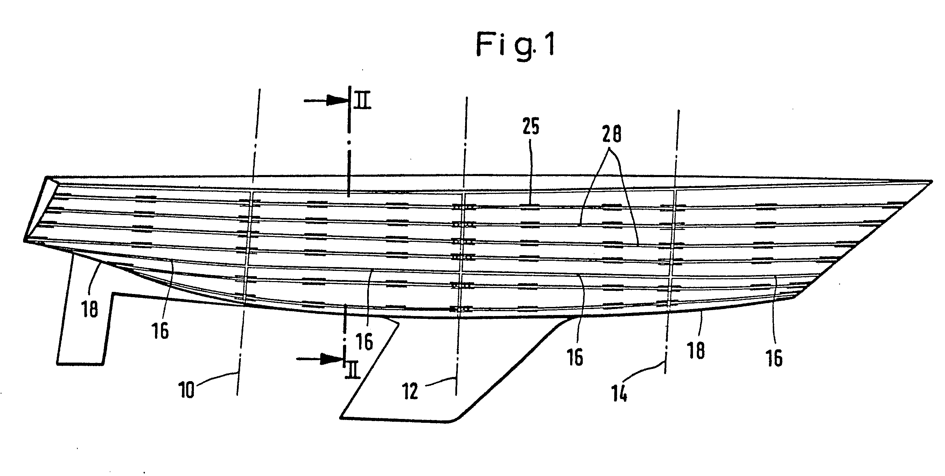

Die Wandung des Körpers des in Fig. 1 gezeigten Bootes ist in einzelne Felder unterteilt und besteht daher aus etwa rechteckigen, mehr oder weniger gewölbten Tafeln, die in parallelen lotrechten Querebenen 10, 12 und 14 des Bootskörpers und an etwa waagerecht verlaufenden Stoßstellen 16 und an der Kiellinie 18 aneinander stoßen. Jede Tafel hat eine Außenhaut 20, eine Innenhaut 22 und dazwischen einen Kern 24. Vorzugsweise besteht die Außenhaut aus Aluminiumblech, das beim vorliegenden Ausführungsbeispiel nur 0,8 mm stark ist. Auch die Innenhaut 22 kann aus diesem Werkstoff bestehen. Der Kern wird vorzugsweise von einem Schaumstoff, zum Beispiel geschäumtem Polyurethan, gebildet.

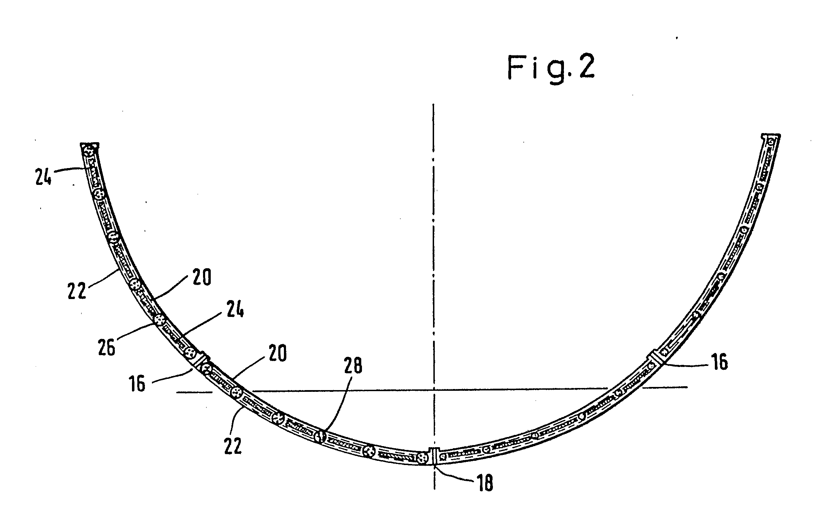

In dem Kern befinden sich über die ganze Fläche der Wandung möglichst gleichmäßig verteilt Halter in Gestalt paralleler Buchsen oder Röhrchen 26, die je an der Innen- und Außenhaut anliegen und an dieser durch Schweißen oder Kleben fest angeheftet sind. Durch diese Buchsen hindurch erstrecken sich selbsttragende Stäbe 28, deren Werkstoff durch Kohlenstoffasern verstärkt ist und außerdem einen diese Fasern miteinander verklebenden Kunststoff enthalten. Beim dargestellten Ausführungsbeispiel erstreckt sich jeder dieser Stäbe über die ganze Länge des Boots, wobei gemäß Fig. 2 jede Tafel durch sechs solcher Stäbe verstärkt ist. Jeder Stab verjüngt sich nach einem Ende hin, und die lichte Weite der ihn umgebenden Buchsen 26 ändert sich entsprechend, und zwar so, daß jeder Stab in seinen Buchsen fest verkeilt werden kann. Infolgedessen nehmen die Buchsen jeden von außen auf die Wandung wirkenden Stoß auf und übertragen ihn auf kurzem Wege auf die

- 9 -

nächstliegenden Buchsen, die sich ihrerseits spielraumfrei auf den Stäben abstützen. Da diese eine außerordentlich hohe Festigkeit haben, die ein Vielfaches der Festigkeit von Stahl beträgt, ergibt sich somit für die beschriebene Wandung eine außerordentlich hohe Stoßfestigkeit. Sie überträgt aber auch alle anderen Kräfte, zum Beispiel Biegungskräfte, auf die versteifend wirkenden Stäbe. Aus diesem Grunde ist es möglich, die Außenhaut außerordentlich leicht auszugestalten.

Auch die Buchsen oder Röhrchen 26 bestehen vorzugsweise aus Leichtmetall, das sich mit den Werkstoffen der Außenhaut und der Innenhaut gut verschweißen läßt.

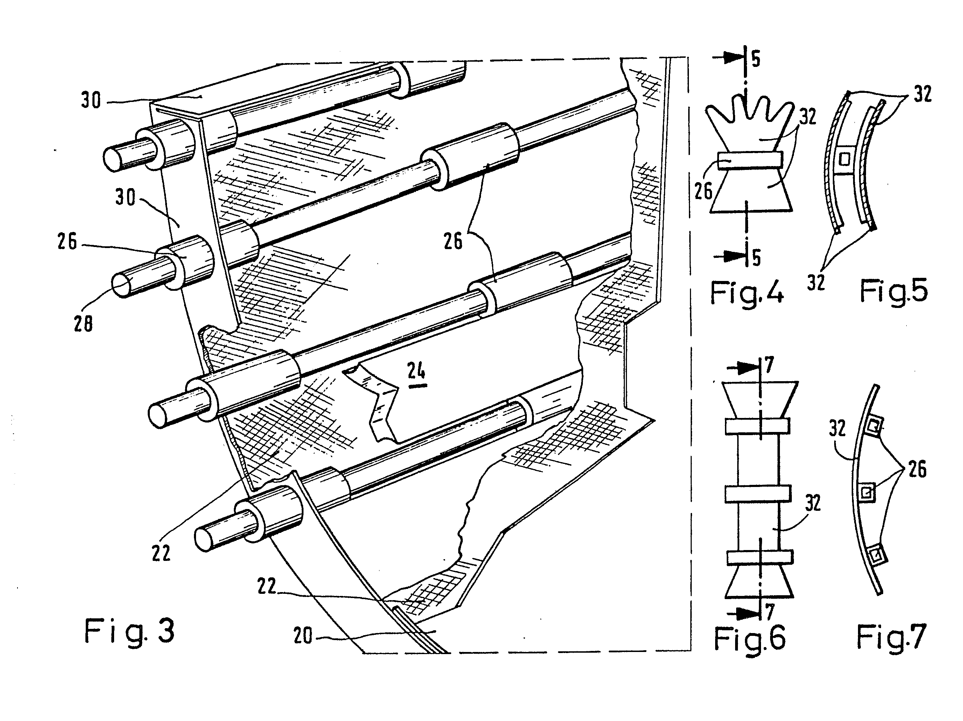

Die Innenhaut 20 oder die Außenhaut 22 oder beide bilden an den Kanten einer jeden Tafel Flansche 30, Fig. 3, die an den Stoßstellen der Tafeln miteinander verschweißt oder verklebt sind und den Kern 24 überdecken. Die an den lotrechten Ebenen 10, 12 und 14 anliegenden Flansche 30 haben Löcher, durch welche einige der Buchsen 26 hindurchgesteckt und mit den Rändern der Löcher verschweißt sind. Auf diese Weise werden die einzelnen Tafeln mit großer Festigkeit vereinigt, so daß man aus ihnen beliebig große Wände bilden kann.

Beim dargestellten Ausführungsbeispiel enthält jede Tafel zur Aufnahme eines jeden Stabes außer den in den Flanschen 30 sitzenden Buchsen 26 noch zwei weitere Buchsen 26.

Um das Anschweißen oder Ankleben der Buchsen oder Röhrchen 26 an die Innen- oder Außenhaut oder an beide zu erleichtern, kann jede Buchse mit Flügeln versehen sein, die an der Haut anliegen und entweder eine große Klebfläche oder eine lange Schweißnaht bilden. So zeigt Fig. 4 ein Röhrchen 26 mit seitlichen Flügeln 32. Einer dieser Flügel hat fingerförmige Ansätze, während der andere trapezförmig gestaltet ist. Wie Fig. 5 zeigt, kann das Röhrchen 26 innen solche Flügel 32 und parallel dazu außen ebenfalls Flügel 32 haben. Wie in den Fig. 6 und 7 gezeigt, kann ein Flügel 32 mehrere Röhrchen 26 miteinander verbinden.

Die Stäbe können sowohl sich verjüngen als auch überall mit dem gleichen Querschnitt ausgebildet sein. Haben sie überall den gleichen Querschnitt, dann müssen sie in den Buchsen eingeklebt werden, weil in diesem Falle der Querschnitt der Stäbe etwas geringer bemessen werden muß als der Querschnitt des Buchsenhohlraums.

Der Zusammenbau der die Wandung bildenden Elemente kann so verlaufen. daß zunächst die mit den Flanschen versehenen Tafeln in die gewünschte Lage gebracht und dann durch Anschweißen oder Ankleben mit den Buchsen 26 versehen werden, die dort wo sie durch die Flansche 30 hindurchgehen, die Tafeln starr miteinander verbinden. Dann werden die Stäbe 28 in die Buchsen 26 eingezogen und mit diesen durch Längsverschiebung fest verkeilt und verklebt. Anschließend wird die Innenhaut aufgebracht. Alsdann wird der innere Hohlraum einer jeden Tafel mit dem Schaumstoff ausgespritzt, wozu jede Tafel mit einer entsprechenden Öffnung versehen sein kann. Der Schaum kann auch in Form von geflexten Tafeln genau passender Stärke eingeklebt werden.

Fig. 8 zeigt schaubildlich eine Ausführungsform der Wandung, deren innerer Aufbau dadurch leichter kenntlich gemacht ist daß die Innenhaut 321 zum Teil weggeschnitten ist. Das gilt auch für eine innen an der Innenhaut angeklebte ganz dünne Schicht 322, die durch hochzugfeste Zugfasern verstärkt ist und deren Stärke 0,5 mm nicht überschreitet. Zum Teil fortgelassen ist au' 'er aus Schaumstoff bestehende Kern 324, der den Raum zwischen Innenhaut und Außenhaut ausfüllt und aus Schaumstoff besteht. Auch die Außenhaut 320 ist innen mit einer ganz dünnen Schicht 321 belegt, die der Schicht 323 entspricht und sich zwischen dem Kern 324 und der Außenhaut 320 befindet.

- 11 -

Die durch die Stränge aus Kohlenstoffasern verstärkten Stäbe 328 haben ein viereckiges, insbesondere quadratisches Querschnittsprofil und sind in Haltern 326 gelagert, die sich mit den Stäben 328 im Kern 324 befinden, an der Außenhaut 322 und an der Innenhaut 320 angeheftet sind und im Abstand voneinander an jedem Stab 328 starr befestigt sind. Die Halter 326 werden je von einem U-förmigen Bügel gebildet, der den Stab 328 umgibt. Die Schenkel 327 dieses Bügels haben Flansche 329, die an der Haut 320 außen befestigt sind. Dieses Befestigen kann durch Schweißen oder Kleben erfolgen, je nach dem Werkstoff, aus dem die Haut 320 besteht. Die Kopffläche eines jeden Bügels 326 ist bei dem dargestellten Ausführungsbeispiel an der Innenhaut 322 angeklebt, wobei die Klebschicht indessen die Faserschicht 323 aufnimmt. Im Bedarfsfall können jedoch in der dünnen Schicht 323 Löcher vorgesehen sein, die eine unmittelbare Berührung zwischen der Kopffläche eines jeden Bügels 326 und der Innenhaut 322 ermöglichen.

Während bei der in Fig. 8 gezeigten Ausführungsform die einzelnen Flanschen 329 der auf verschiedenen Stäben 328 nebeneinander liegend angeordneten Bügeln 326 voneinander durch Abstände 330 getrennt sind, können die Flanschen 329 der Schenkel 327 aus einem Stück bestehen, wie es in Fig. 9 gezeigt ist.

Die in Fig. 10 gezeigte Ausführungsform unterscheidet sich von derjenigen der Fig. 8 nur dadurch, daß ein Teil der Bügel 326 mit seinen Flanschen 329 an der Innenhaut 322 und der andere Teil der Bügel mit seinen Flanschen an der Außenhaut 320 haftet.

Die durch Stränge aus Kohlenstoffasern verstärkten Stäbe können hohl ausgestaltet sein. Das ist in den Fig. 10 - 14 dargestellt.

Während bei der in den Fig. 2 und 3 gezeigten Ausführungs-

- 12 -

form die Tafeln an ihren Kanten mit Flanschen versehen sind, zeichnet sich die in Fig. 15 bis 17 gezeigte Aus-führungsform der Wandung dadurch aus, daß die die Innenhaut 420 und/oder die Außenhaut 422 bildenden Blechtafeln an den Stoßstellen 410 stumpf aneinanderstoßen. Die dort entstehende Fuge ist durch ein Blech 432 abgedeckt, das innen auf der Haut 422 aufliegt und an ihr fest haftet. Diese Haftung kann durch Schweißen oder Kleben herbeigeführt werden. Die Halter 426, Fig. 15, die von Buchsen gebildet sein können, liegen am Blech 432 an und sind an diesem starr befestigt. Auch diese Befestigung kann durch Schweißen oder Kleben herbeigeführt werden. Die Stäbe 428 gehen durch die Buchsen 426 hindurch, wie bei der in den Fig. 2 und 3 dargestellten Ausführungsform.

Ebenso wie jeder Halter 26 mittels der Blechtafel 432 an der Außenhaut 422 befestigt ist, ist er auch durch eine Blechtafel 432 an der Innenhaut 420 befestigt. Die Stäbe 428 und auf diesen sitzenden Buchsen 426 haben einen viereckigen, insbesondere quadratischen Querschnitt.

Bei den in den Fig. 18, 19 und 20 gezeigten Ausführungsbeispielen bilden die einander gegenüberliegenden Bleche 432 und 532 einen Blechkörper. Bei den Ausführungsformen der Fig. 18 und 19 stellt dieser Blechkörper ein Rohr dar, dessen Länge den Durchmesser des Stabes 428 übertrifft und sich über die ganze Länge der Fuge erstrecken kann. Die Seitenwände 440 und 441 dieses Rohres haben einen Abstand, der kleiner als die Länge der Buchse 426 ist. Ferner sind diese Seitenwände 440 und 441, die parallel zur Stoßstelle 410 verlaufen, mit Öffnungen versehen, die zueinander ausgerichtet sind und dazu dienen, die Buchse 426 spielraumfrei aufzunehmen. Während bei der Ausführungsform der Fig. 18 die Seitenwände 440 und 441 parallel verlaufen und das Rohr daher ein rechteckiges Querschnittsprofil hat, sind diese Seitenwände 442 und 443 bei der Ausführungsform der Fig. 19 zueinander geneigt, was ein trapezförmiges Querschnittsprofil des Rohres ergibt.

- 13 -

In den Fig. 19 und 20 ist zugunsten einer einfacheren Darstellung die Innenwand 420 fortgelassen.

Bei der Ausführungsform der Fig. 20 bildet der Blechkörper ein U-förmig profiliertes Stück, dessen Schenkel 444 und 445 die Seitenwände darstellen, die mit den Löchern versehen sind, welche die Buchse 426 aufnehmen.

Bei der in Fig. 21 gezeigten Ausführungsform der Erfindung enthält der Kern zwischen der Innenwand 120 und der Außenwand 522 zusätzlich zu der Lage paralleler faserverstärkter Stäbe 528 eine Lage sich quer dazu erstreckender Stäbe 529. Während die Stäbe 528 mit ihren Buchsen 526 an der Außenhaut 522 angeheftet sind, sind die Buchsen 526 der Stäbe 529 an der Innenhaut 520 angeheftet. Dieses Anheften geschieht ebenso, wie bei der Ausführungsform der Fig. 15, 16 und 17 mit Hilfe zwischengelegter Blechtafeln 532.

Ferner zeichnet sich die Ausführungsform der Fig. 21 dadurch aus, daß der Kern aus Schaumstoff durch ein zur Außenhaut 522 und Innenhaut 520 paralleles Blech 521 unterteilt ist. An diesem Blech sind beiderseits die Lagen der Stäbe 528 und 529 mittels ihrer Buchsen 526 und mittels zwischengelegter Bleche angeheftet.

Das in Fig. 21 gezeigte Ausführungsbeispiel kann dadurch vereinfacht werden, daß die Buchsen 526 unmittelbar an dem Blech 521 durch Kleben oder Schweißen angeheftet sind.

Bei der in Fig. 15 und 16 gezeigten Ausführungsform ist nur eine Stoßstelle 410 gezeigt, die sich quer zu den Stäben 428 erstreckt. Die die Außenhaut 422 bildenden Platten stoßen aber auch an Stellen zusammen, die parallel zu den Stäben verlaufen. Auch dort können die Platten stumpf aneinanderstoßen und durch ein innen aufgeklebtes oder aufgeschweißtes Blech abgedichtet sein.

Der Winkel, den die Stäbe 528 und 529 bei der Ausführungsform der Fig. 21 bilden, kann vom rechten Winkel abweichen.

Wenn jeder Halter aus zwei Hälften besteht, von denen die eine an der einen Haut und die andere an der anderen Haut befestigt ist, wie es mit Bezug auf die Fig. 11 und 12 beschrieben wird, dann empfiehlt es sich, die beiden Hälften so auszugestalten, daß sie beim Zusammenbau der Wandung den zwischen ihnen liegenden Stab 428 bzw. 528 bzw. 628 mit einer Schnappverbindung ergreifen und zwischen sich festhalten, wenn die beiden Häute an den dazwischen liegenden Kern und an die dazwischen liegenden Stäbe angedrückt werden.

Bei der Ausführungsform der Fig. 11 ist das dadurch erreicht, daß die Schenkel der unteren Hälfte des Halters 426 mit Vorsprüngen 427 versehen sind, die in seitliche Vertiefungen 428 des Stabes 328 einschnappen, wenn die mit den Halterhälften 426 versehene Haut 322 an den auf der Haut 328 liegenden Kern angedrückt wird. Die anderen Hälften 425 der Halter können dadurch starr an dem Stab 328 befestigt sein, daß sie ebenfalls U-förmig gestaltet sind und Schenkel haben, welche in die Vertiefungen 328 hinein umgebogen sind, wie es in Fig. 11 gestrichelt gezeigt ist.

Auch in diesem Falle empfiehlt es sich, den Stab 328 hohl auszugestalten.

Bei der in Fig. 12 gezeigten Ausführungsform der Erfindung haben die Schenkel der oberen Hälfte des Halters 625 Löcher. Diese Schenkel streben nach innen auseinander, so daß beim Andrücken der unteren Haut an die obere die an der unteren Haut sitzenden Hälften 626 der Halter zwischen die Schenkel der oberen Hälfte 625 und den Wänden des Stabes 628 eindringen können. Die Schenkel der unteren Halterhälften haben an ihren Enden Haken, die dabei in Löcher 640 der Schenkel der oberen Halterhälften einschnappen.

Bei der in Fig. 13 gezeigten Ausführungsform der Wandung besteht jede Halterhälfte aus einem Zapfen 525 bzw. 526 mit einem Kopf, der in eine Öffnung des Stabes eingedrückt werden kann und dann fest in diese Öffnung einschnappt. Auch dabei ist der Stab 528 hohl ausgebildet.

Fig. 14 zeigt eine Ausführungsform, bei welcher der Bügel 726 mit seinen Schenkeln 727 um den Stab 728 herumgebogen ist, wie es in Fig. 14 gestrichelt dargestellt ist. Dieser Bügel 726 haftet nur an der einen Haut 720, während der hohle Stab 728 an der anderen Haut 722 haftend befestigt ist. Dabei kann sich zwischen der Haut 722 und dem Stab 728 von trapezförmigem Querschnitt die dünne Schicht 321 der Fig. 8 befinden.

Wenn drei dieser Wandungen zusammenstoßen und ihre aneinander stoßenden Ränder miteinander zu verbinden sind, dann eignet sich dafür besonders die in Fig. 22 gezeigte Ausführungsform. Jede dieser drei Wandungen hat zwei äußere Häute 20 und 22, zwischen denen sich ein Kern befindet, der der Einfachheit halber in Fig. 22 nicht mit dargestellt ist. In diesen Kern sind parallele faserverstärkte Stäbe 28 eingebettet, auf denen sich im Abstand voneinander Halter befinden, die an den Häuten 20 und 22 angeheftet sind.

Am Rand einer solchen Wandung, der sich quer zu den Stäben 28 erstreckt, ragen diese Stäbe 28 über die Ränder der Häute 20 und 22 um eine Strecke A hinaus, die zweckmäßig mindestens ebenso lang wie die Dicke der Wandung bemessen ist. Parallel zum Rand der Wandung, also quer zu den Stäben 28, erstreckt sich nun ein U-förmig profilierter Blechträger 50, dessen Schenkel bei 52 an den Innenflächen der Häute 20 und 22 durch Kleben oder Schweißen angeheftet sind. Die Stäbe 28 ragen in diesen U-förmig profilierten Träger 50 hinein und durch Löcher 54 hindurch, die in den Böden der U-förmig profilierten Träger vorgesehen sind. Die auf den Enden der Stäbe 28 sitzenden Halter, z.B. Buchsen 32', die an den Häuten 20 und 22 durch Kleben oder Schweißen angeheftet sind, ragen ebenfalls in den U-förmig profilierten Träger 50 hinein und sind dort entsprechend abgeflacht.

Der U-förmig profilierte Träger 50 hat auch in seinen Armen Löcher, die in der Längsrichtung gegenüber den Löchern 54 versetzt sind und dem Zweck dienen, die Stäbe 28 der beiden anderen Wandungen hindurchtreten zu lassen, die ausgerichtet zueinander am Rande der mittleren Wandung starr befestigt werden sollen. Diese beiden anderen Wandungen sind im übrigen ebenso ausgestaltet wie die beschriebene, enthalten also an ihren Rändern die U-förmig profilierten Träger und in diese hineinragende Buchsen 32'.

Die beschriebenen Ausführungsbeispiele können in mannigfacher Hinsicht abgewandelt werden. So besteht die Möglichkeit, die Kohlenstoffasern durch andere hochzugfeste Fasern zu ersetzen, z.B. durch Aramid-Fasern, die unter der Bezeichnung "Kevlar" erhältlich sind.

Auch kann die Unterteilung der Häute in einzelne Tafeln unterbleiben.

Auch kann der Kern aus Schaumstoff von einzelnen Füllstücken gebildet werden, welche die Hohlräume ausfüllen, die im Innenraum zwischen der Innenhaut und der Außenhaut zwischen den Stäben und den Haltern verbleiben. Diese Füllstücke können die Stäbe in ihrer Lage festklemmen.

Patentansprüche:

1. Aus aufeinander haftenden Schichten bestehende Wandung eines Hohlkörpers, die eine Außenhaut, eine Innenhaut und dazwischen einen Kern aufweist und durch Stränge aus hochzugfesten Fasern verstärkt ist, dadurch gekennzeichnet, daß Stäbe (28), deren Werkstoff durch die Stränge aus hochzugfesten Fasern verstärkt ist, in Haltern (26) gelagert sind, die sich mit den Stäben (28) im Kern (24) befinden, an der Innenhaut (20) und/oder an der Außenhaut (22) angeheftet sind und im Abstand voneinander an jedem Stab (28) starr befestigt sind.

2. Wandung nach Patentanspruch 1, dadurch gekennzeichnet, daß die hochzugfesten Fasern aus Kohlenstoff bestehen.

3. Wandung nach Patentanspruch 1 oder 2, dadurch gekennzeichnet, daß die Wandung aus einzelnen aufeinanderstoßenden und miteinander verbundenen Tafeln gebildet ist, die wesentlich kürzer als die Stäbe (28) bemessen sind.

4. Wandung nach Patentanspruch 3, dadurch gekennzeichnet, daß die Stoßstellen (10), an denen die Tafeln stumpf aneinanderstoßen, von Blechen (32) abgedeckt und abgedichtet sind, an denen die Halter (26) befestigt sind.

5. Wandung nach einem der Patentansprüche 1 - 4, dadurch gekennzeichnet, daß die Halter von Buchsen (26) gebildet werden, die je einen Stab umgeben.

6. Wandung nach Patentanspruch 3 und 5, dadurch gekennzeichnet, daß die Tafeln an ihren Kanten mit Flanschen (30) versehen sind, durch die hindurch sich die Buchsen (26) erstrecken.

7. Wandung nach Patentanspruch 6, dadurch gekennzeichnet, daß die Buchsen mit den Flanschen haftend verbunden sind.

8. Wandung nach Patentanspruch 4 und 5, dadurch gekennzeichnet, daß die Bleche (32) von Blechkörpern gebildet sind, die parallel zur Stoßstelle (10) verlaufende Seitenwandungen (40 - 45) haben, die mit Öffnungen zur Aufnahme der Buchsen (26) versehen sind und sich an diesen abstützen.

9. Wandung nach Patentanspruch 8, dadurch gekennzeichnet, daß die Blechkörper von kurzen Rohren gebildet sind, deren Achse parallel zur Stoßstelle verläuft und deren Querschnittsprofil rechteckig oder trapezförmig ist oder daß diese Blechkörper ein U-Querschnittsprofil haben.

10. Wandung nach einem der Patentansprüche 1 - 9, dadurch gekennzeichnet, daß der Kern zusätzlich zu der Lage paralleler, faserverstärkter, mit ihren Haltern (26) an der Außenhaut (22) angehefteter Stäbe (28) eine Lage sich quer dazu erstreckender faserverstärkter Stäbe (128) enthält, deren Halter (126) an der Innenhaut (20) angeheftet sind, und durch ein zur Außenhaut (22) und Innenhaut (20) paralleles Blech (120) unterteilt ist, an dem beiderseits die Lagen der Stäbe (28, 128) mittels ihrer Halter (26, 126) angeheftet sind.

11. Wandung nach einem der Patentansprüche 5 - 10, dadurch gekennzeichnet, daß sich jeder Stab (28) nach einem Ende hin verjüngt und sich die lichte Weite der ihn umgebenden Buchsen (26) entsprechend ändert und daß der Stab in seinen Buchsen verkeilt ist.

12. Wandung nach einem der Patentansprüche 5 - 13, dadurch gekennzeichnet, daß die Buchsen (26) Flügel (32) haben, die an der Innenhaut (22) oder der Außenhaut (20) oder an beiden angeklebt sind.

13. Wandung nach Patentanspruch 1, 2 oder 3, dadurch gekennzeichnet, daß einige oder alle Halter je von einem U-förmigen Bügel (326) gebildet werden, der den Stab (328) umgibt.

14. Wandung nach Patentanspruch 13, dadurch gekennzeichnet, daß die Schenkel (327) des Bügels Flanschen (329) haben, die an der einen Haut haftend befestigt sind, während der Bügel (326) an der anderen Haut haftend befestigt ist.

15. Wandung nach Patentanspruch 13, dadurch gekennzeichnet, daß der Bügel (726) mit seinen Schenkeln (727) um den Stab (728) herumgebogen ist und nur an der einen Haut (720) haftet, während der Stab (728) an der anderen Haut (722) haftend befestigt ist.

16. Wandung nach Patentanspruch 14, dadurch gekennzeichnet, daß die Flanschen (329) der Schenkel (327) von Bügeln (326), die die benachbarten Stäbe (328) umgeben, aus einem Stück bestehen.

17. Wandung nach Patentanspruch 1, 2 oder 3, dadurch gekennzeichnet, daß jeder Halter aus zwei Hälften (425, 426 oder 525, 526 oder 625, 626) besteht, von denen die eine an der einen und die andere an der anderen Haut befestigt ist.

18. Wandung nach Patentanspruch 17, dadurch gekennzeichnet, daß die beiden Hälften der Halter beim Zusammenbau der Häute (320, 322) mit dem Kern den zwischen ihnen liegenden Stab (428, 528, 628) mit einer Schnappverbindung ergreifen und zwischen sich festhalten.

19. Wandung nach Patentanspruch 18, da  ch gekennzeichnet, daß jede Hälfte des Halters U-förmig gestaltet ist und seine Schenkel mit Vorsprüngen versehen sind, die in Vertiefungen des Stabes einschnappen.

20. Wandung nach Patentanspruch 18, dadurch gekennzeichnet, daß jeder Halter aus einem Zapfen mit einem Kopf besteht, der in eine Öffnung des Stabes eingedrückt werden kann.

21. Wandung nach einem der Patentansprüche 1 - 20, dadurch gekennzeichnet, daß die Stäbe (28) hohl sind.

22. Wandung nach Patentanspruch 21, dadurch gekennzeichnet, daß die hohlen Stäbe ein viereckiges Querschnittsprofil haben.

23. Wandung nach einem der Patentansprüche 1 - 22, dadurch gekennzeichnet, daß die Innenhaut (22) oder die Außenhaut (20) oder beide aus Aluminiumblech bestehen.

24. Wandung nach einem der Patentansprüche 1 - 23, dadurch gekennzeichnet, daß der Kern (24) aus einem Schaumstoff besteht.

25. Wandung nach einem der Patentansprüche 1 - 24, dadurch gekennzeichnet, daß die Außenhaut und/oder die Innenhaut mit einer durch hochfeste Zugfasern verstärkten Schicht belegt und durch diese Schicht von dem Kern getrennt ist.

26. Wandung nach einem der Patentansprüche 1 - 25, dadurch gekennzeichnet, daß sich die am Rand der Wandung endenden Stäbe in einen Blechträger mit U-Profil hineinerstrecken, von dessen Armen der eine an der Innenhaut und der andere an der Außenhaut angeheftet ist.

27. Wandung nach Patentanspruch 26, dadurch gekennzeichnet, daß der U-Profilträger über die Ränder der Innenhaut und der Außenhaut um eine Strecke hervorsteht, die mindestens der Stärke der Wandung entspricht, und mit Querbohrungen versehen ist, die bei Anschluß querverlaufender Wandungen zur Aufnahme der Stäbe dieser Wandungen dienen.

# Fig.1

# Fig.2

Fig. 3

Fig. 4

Fig. 5

Fig. 6

Fig. 7

Fig. 8

0014262

4/10

Fig.9

Fig.10

Fig.11

Fig.12

Fig.13

Fig.14

Fig.15

Fig. 16

Fig. 17

## Fig.18

## Fig.19

0014262

## Fig.20

445    444    426

410    422

## Fig.21

510    522
532    526    528
528    521
532    529    526    526    529    520

Fig.22

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 1 452 606 (TECIMAR) <br> * Seite 1, Spalte 2, Absätze 6,8; Seite 2, Spalte 1, Absätze 1-3, 6,7; Figuren 1,2 * <br><br> -- <br><br> DE - A - 2 012 348 (STALEY) <br> * Seite 6, Absatz 4 - Seite 7, Absatz 3; Ansprüche 1,4,7,12, 13; Figuren * <br><br> -- <br><br> FR - A - 1 295 131 (KRAJCINOVIC) <br> * Seite 2, Spalte 2, Absatz 2; Figuren 1,7 * <br><br> ---- | 1,3, 21,24 <br><br><br><br> 1,2,12 13,16, 25 <br><br><br><br> 1,5-7, 9 |

**KLASSIFIKATION DER ANMELDUNG (Int. Cl.)**

E 04 C 2/26
2/40//
B 63 B 5/24
B 64 C 3/00
1/00

**RECHERCHIERTE SACHGEBIETE (Int. Cl.)**

E 04 C
B 63 B
B 64 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 03-04-1980 | VANDEVONDELE |

EPA form 1503.1 06.78